# EUROPEAN PATENT APPLICATION

(11) **EP 4 116 929 A1**
(43) Date of publication of application: **11.01.2023**
(21) Application number: 21764384.0
(22) Date of filing: 27.01.2021
(51) Int. Cl.: G06T 7/00, H04N 5/232

(54) **INFORMATION PROCESSING METHOD, INFORMATION PROCESSING SYSTEM, AND INFORMATION PROCESSING DEVICE**

(30) Priority: 02.03.2020 US 202062984011 P; 31.08.2020 JP 2020145219
(71) Applicant: Panasonic Intellectual Property Corporation of America, Torrance, CA 90504 (US)
(72) Inventor: ISHII, Yasunori, Osaka-shi, Osaka 540-6207 (JP); SATO, Satoshi, Osaka-shi, Osaka 540-6207 (JP)
(74) Representative: Novagraaf International SA
(86) International application number: PCT/JP2021/002859
(87) International publication number: WO 2021/176899

(57) **Abstract**

An information processing method is executed by a computer and includes: obtaining a third model in which a first model and a second model are connected so that an output of the first model becomes an input of the second model, the first model being a machine learning model that performs a deblurring process of an input image and outputs a feature quantity, the second model being a machine learning model that performs an object recognition process of the input image and outputs a result of the object recognition (S31); training the third model through machine learning so that a difference between a result of object recognition and reference data decreases, the result of the object recognition being output from the third model after a training image with blur is input into the third model, the reference data relating to the result of the object recognition corresponding to the training image (S33); and outputting the third model which has undergone the training (S34).

## Description

### [Technical Field]

The present disclosure relates to an information processing method, an information processing system, and an information processing device.

### [Background Art]

In recent years, techniques for processing images to protect privacy have been studied and developed. For example, non-patent literature (NPL) 1 discloses that the face of a human present in an image is detected and a blurring process is performed on the facial part. Furthermore, non-patent literature (NPL) 2 disclosures that a human present in an image is detected and the human part is replaced with another image.

On the other hand, an object, characters, or the like (hereinafter, also simply referred to as an object) present in an image have been recognized through object recognition by machine learning using images. When object recognition is performed by machine learning, it is desired that an input image be an on-focus image (image with a clear contour (in terms of increasing the resulting recognition accuracy)). For example, NPL 1 discloses an image processing device capable of generating a contour enhanced image having an enhanced contour from an input image.

### [Citation List]

### [Patent Literature]

[PTL 1] Japanese Unexamined Patent Application Publication No. 2019-67106

### [Non Patent Literature]

[NPL 1] Nodari, A., Vanetti, M., Gallo, I.: Digital privacy: Replacing pedestrians from google street view images. In: Proceedings of the 21st International Conference on Pattern Recognition (ICPR2012). pp. 2889-2893. IEEE (2012)
[NPL 2] Fernandes, F.E., Yang, G., Do, H.M., Sheng, W.: Detection of privacy-sensitive situations for social robots in smart homes. In: 2016 IEEE International Conference on Automation Science and Engineering (CASE). pp. 727-732. IEEE (2016)

### [Summary of Invention]

### [Technical Problem]

However, in each of the above-described conventional techniques, it is difficult to cause an object recognition model to recognize an object present in an image while protecting privacy relating to the object present in the image. For example, in the object recognition using images processed using any of non-patent literatures 1 and 2, the results of the recognition often become worse. Besides, the technique disclosed in patent literature (PTL) 1 does not consider protection of privacy relating to an object, or the like present in an image.

In view of this, the present disclosure provides an information processing method, an information processing system, and an information processing device which make it possible to reduce decrease in recognition performance in object recognition while protecting privacy relating to an object present in an image.

### [Solution to Problem]

An information processing method according to an aspect of the present disclosure is a method which is executed by a computer and which includes: obtaining a third model in which a first model and a second model are connected so that an output of the first model becomes an input of the second model, the first model being a machine learning model that performs a deblurring process of an input image and outputs a feature quantity, the second model being a machine learning model that performs an object recognition process of the input image and outputs a result of the object recognition; training the third model through machine learning so that a difference between a result of object recognition and reference data decreases, the result of the object recognition being output from the third model after a training image with blur is input into the third model, the reference data relating to the result of the object recognition corresponding to the training image; and outputting the third model which has undergone the training.

An information processing system according to an aspect of the present disclosure includes: an obtainer which obtains a third model in which a first model and a second model are connected so that an output of the first model becomes an input of the second model, the first model being a machine learning model that performs a deblurring process of an input image and outputs a feature quantity, the second model being a machine learning model that performs an object recognition process of the input image and outputs a result of the object recognition; a trainer which trains the third model through machine learning so that a difference between a result of object recognition and reference data decreases, the result of the object recognition being output from the third model after a training image with blur is input into the third model, the reference data relating to the result of the object recognition corresponding to the training image; and an outputter which outputs the third model which has undergone the training.

An information processing device according to an aspect of the present disclosure includes: an obtainer which obtains an image with blur; a controller which obtains a result of object recognition by inputting the image with blur into a third model in which a first model and a second model are connected so that an output of the first model becomes an input of the second model, the first model being a machine learning model that performs a deblurring process of an input image and outputs a feature quantity, the second model being a machine learning model that performs an object recognition process of the input image and outputs a result of the object recognition; and an outputter which outputs information based on the obtained result of object recognition. The third model is a machine learning model trained through machine learning using a result of object recognition and reference data. The result of the object recognition is output from the third model after a training image with blur is input into the third model, and the reference data relates to the result of the object recognition corresponding to the training image.

### [Advantageous Effects of Invention]

The information processing method, etc., according to aspects of the present disclosure make it possible to reduce decrease in recognition performance in object recognition while protecting privacy relating to an object present in an image.

### [Brief Description of Drawings]

[FIG. 1]

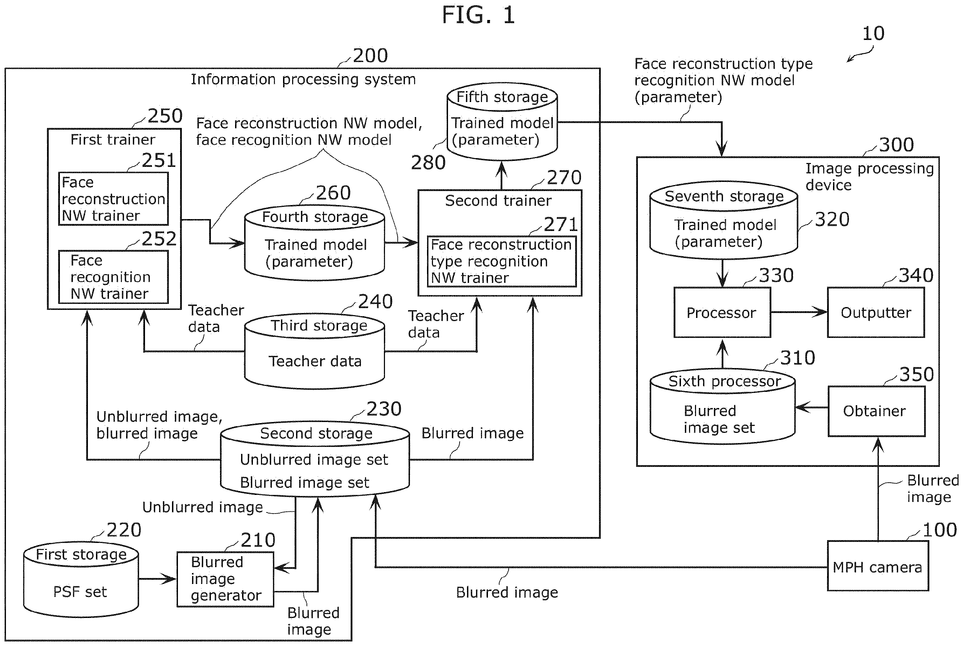

   FIG. 1 is a block diagram illustrating a functional configuration of an information system according to an embodiment.
[FIG. 2]

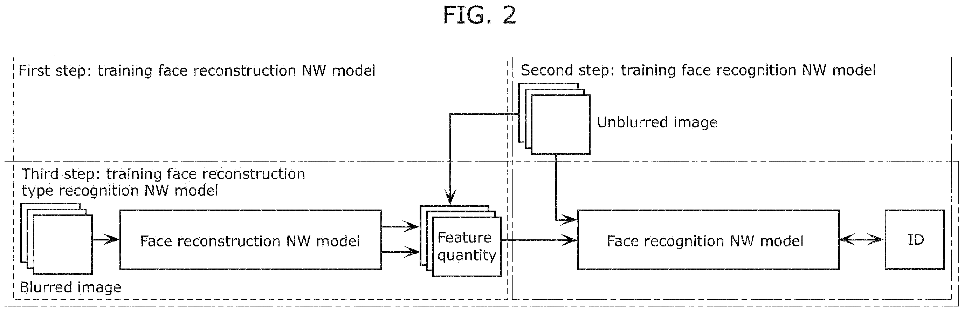

   FIG. 2 is a diagram schematically illustrating a procedure of training a face reconstruction type recognition NW model in an information processing system according to the embodiment.
[FIG. 3]

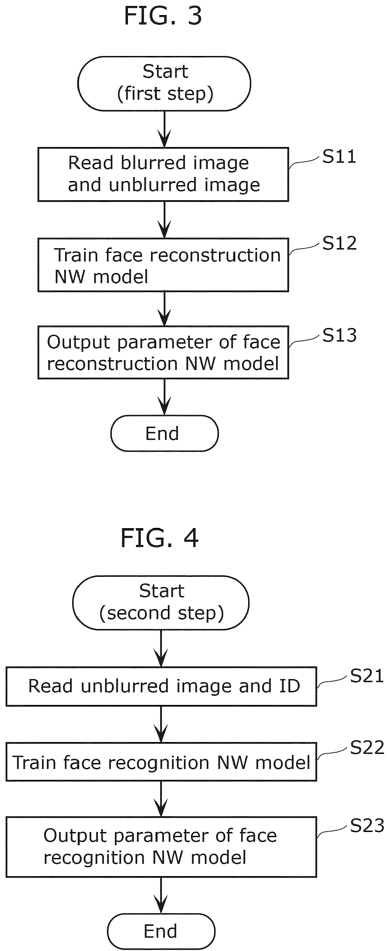

   FIG. 3 is a flow chart indicating a training process of a face reconstruction NW model in the information processing system according to the embodiment.
[FIG. 4]
   FIG. 4 is a flow chart indicating a training process of a face recognition NW model in the information processing system according to the embodiment.
[FIG. 5]

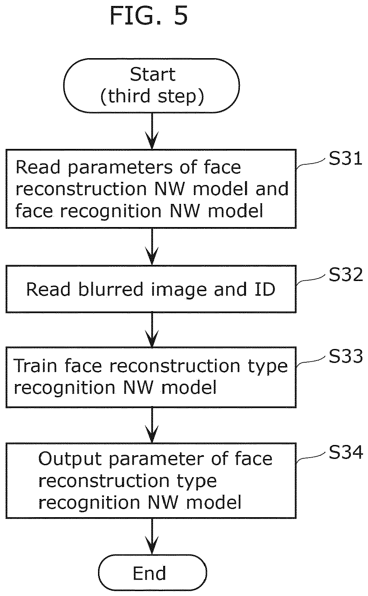

   FIG. 5 is a flow chart indicating a training process of a face reconstruction type recognition NW model in the information processing system according to the embodiment.
[FIG. 6]

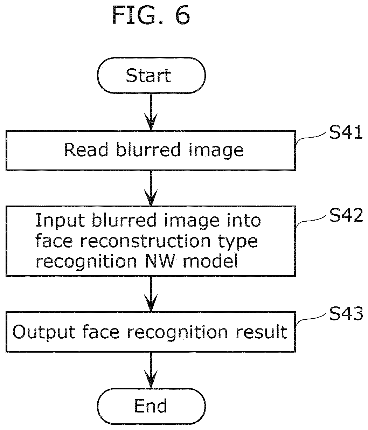

   FIG. 6 is a flow chart indicating a recognition process using a face reconstruction type recognition NW model in an information processing device according to the embodiment.
[FIG. 7]

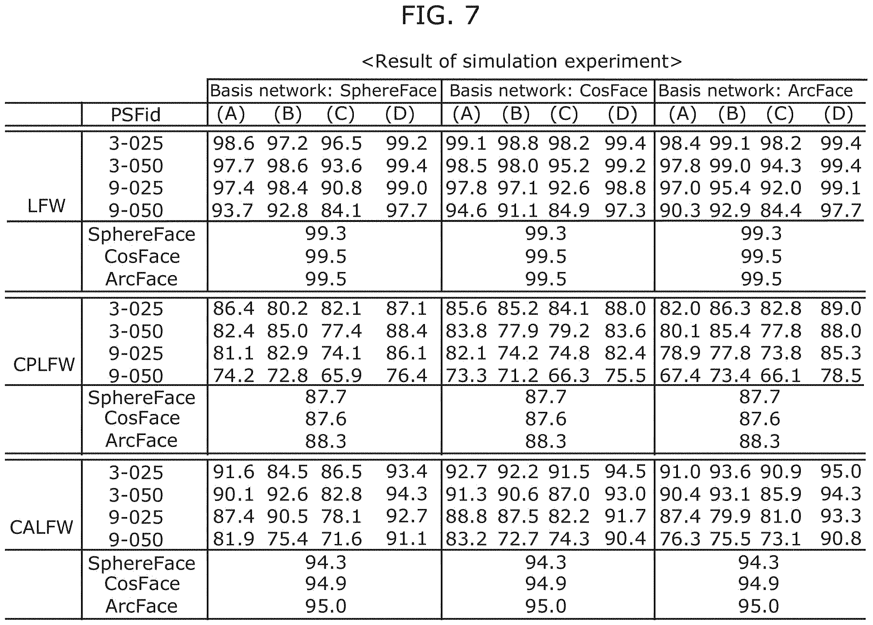

   FIG. 7 is a diagram indicating comparison in recognition performance for each of training conditions in the case where the face reconstruction type recognition NW model is trained using, as a training image, a blurred image generated by a blurred image generator.
[FIG. 8]

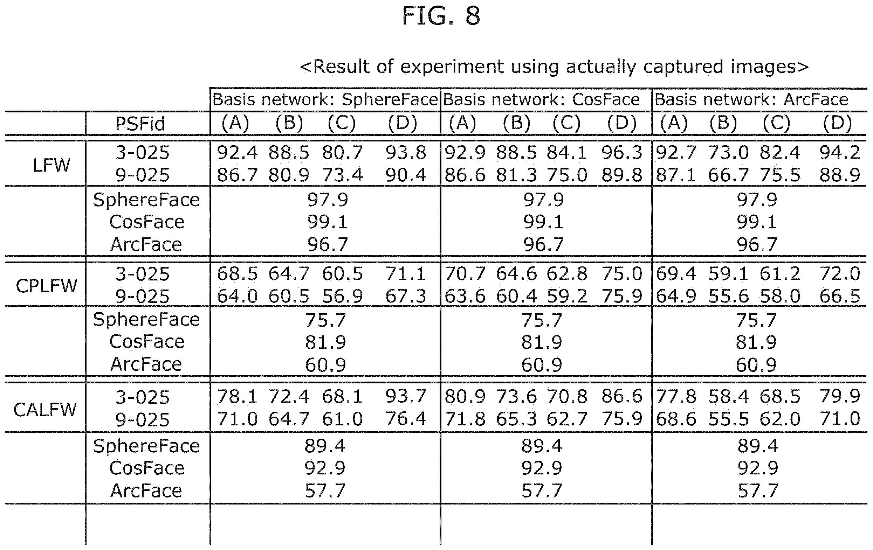

   FIG. 8 is a diagram indicating comparison in recognition performance for each of training conditions in the case where the face reconstruction type recognition NW model is trained using, as a training image, a blurred image captured by a multi-pinhole camera.
[FIG. 9]

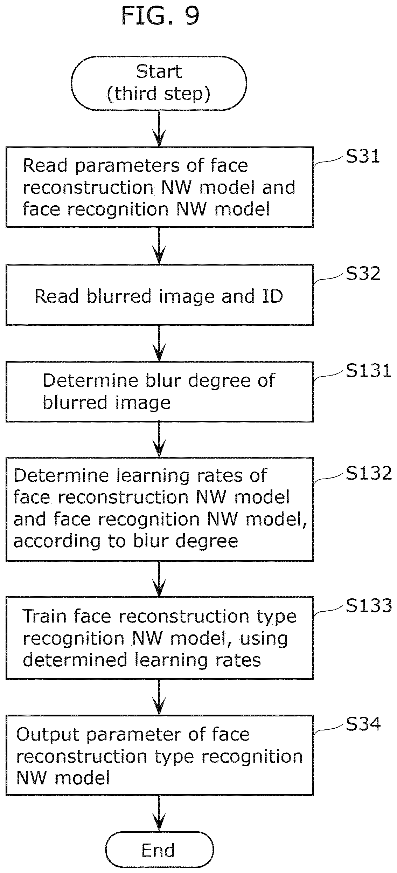

   FIG. 9 is a flow chart indicating a training process of a face reconstruction type recognition NW model in an information processing system according to variation 1 of the embodiment.
[FIG. 10]

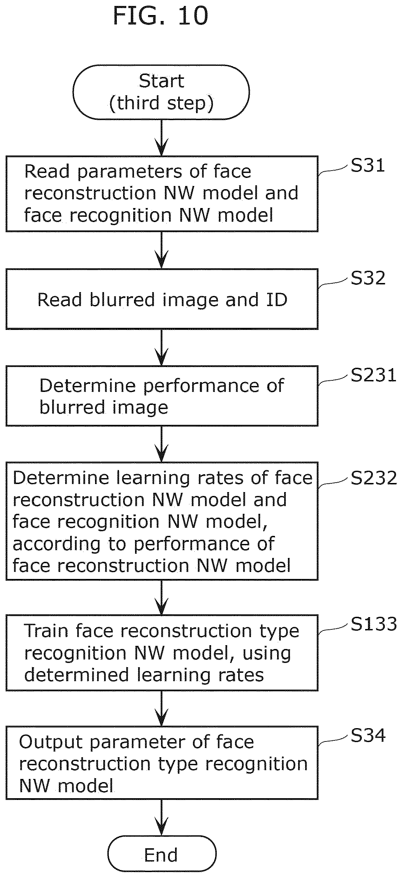

   FIG. 10 is a flow chart indicating a training process of a face reconstruction type recognition NW model in an information processing system according to variation 2 of the embodiment.

### [Description of Embodiments]

### [Background Leading To the Present Disclosure]

The background leading to the present disclosure is described prior to a description of an embodiment according to an embodiment.

In recent years, cameras such as monitoring cameras are widely disposed indoors and outdoors, and it is easy to obtain images with information related to privacy such as a state of a person at home, the face of a passerby, the license plate of a vehicle, etc. Performing face recognition which is one example of object recognition onto such an image makes it possible to use the result of the face recognition in various kinds of applications. The use includes controlling home appliances suitably for individuals, obtaining interaction suitably for individuals, etc.

Meanwhile, protection of privacy relating to objects present in images captured by cameras becomes increasingly important. When performing object recognition using processed images as disclosed in NPL 1 and NPL 2 in terms of privacy protection, the results of recognition often become worse. Furthermore, in the techniques disclosed in NPL 1 and NPL 2, privacy protection is insufficient because there is a risk that images that are before being processed leak to outside. In addition, the technique disclosed in PTL 1 does not consider protection of privacy relating to an object, etc., present in an image.

In view of this, in the present disclosure, an image of an object is captured using a multi-pinhole camera in terms of protection of privacy relating to the object preset in the image. The image (a multi-pinhole image: an MPH image) captured by the multi-pinhole camera is an image with parallax characteristics. This is described in detail later. In other words, the MPH image is an image with blur (blurred image). In this way, since the obtained image is the blurred image, it is possible to protect privacy of the object. It is to be noted that the multi-pinhole camera is a camera having a multi-pinhole mask in which multiple pinholes are formed.

For example, object recognition is performed on such an MPH image using an object recognition model generated through machine learning. The object recognition model is required to perform object recognition with high accuracy even when the MPH image captured by the multi-pinhole camera is input, in other words, the blurred image is input. However, it is difficult to effectively train the object recognition model which performs object recognition of the MPH image which is the image with blur characteristic to images captured by the multi-pinhole camera, in other words, reducing decrease in recognition performance.

In view of this, the Inventors of the present invention have keenly studied how to reduce decrease in recognition performance in object recognition models which perform object recognition of images such as MPH images which can protect privacy, and have arrived at an image processing method, etc., indicated below. The object recognition model trained using the information processing method, etc., indicated below is capable of reducing decrease in recognition performance in object recognition while protecting privacy relating to an object in object recognition of the object using images. Although a case in which the object recognition model is a face recognition model (one example of an object recognition model) is described below, but it is to be noted that the object recognition model is not limited thereto. The present disclosure is also applicable to an object recognition model other than the face recognition model.

An image processing method according to an aspect of the present disclosure is a method which is executed by a computer and which includes: obtaining a third model in which a first model and a second model are connected so that an output of the first model becomes an input of the second model, the first model being a machine learning model that performs a deblurring process of an input image and outputs a feature quantity, the second model being a machine learning model that performs an object recognition process of the input image and outputs a result of the object recognition; training the third model through machine learning so that a difference between a result of object recognition and reference data decreases, the result of the object recognition being output from the third model after a training image with blur is input into the third model, the reference data relating to the result of the object recognition corresponding to the training image; and outputting the third model which has undergone the training.

In this way, the third model uses the training image with blur as the input image at the time of training, and thus the third model is capable of appropriately performing the object recognition even when the image with blur is input at the time of recognition. In other words, the third model is capable of appropriately performing the object recognition without using any unblurred image for which privacy is not protected. Furthermore, since the third model which is generated by connecting the first model and the second model is integrally trained, the output of the first model is changed to increase the object recognition performance of the second model. For this reason, it is possible to increase the accuracy in object recognition, compared with the case in which the first model and the second model are used independently (for example, the first mode and the second model are trained independently). Furthermore, since the first model and the second model are integrated in the third model, there is no case in which the output of the first model leaks to outside. For this reason, it is possible to strengthen protection of privacy, compared with the case in which the first model and the second model are independent. Furthermore, even if the output of the first model leaks to outside, the privacy is protected because the first model is connected to and trained integrally with the second model and thus the output of the first model changes to a value which cannot be recognized by any human. Thus, the information processing method according to the aspect of the present disclosure makes it possible to reduce decrease in recognition performance in the object recognition while protecting the privacy of the object in the object recognition of the object using images. It is to be noted that the output of the first model changes through the training of the third model as described above, the output may be data having values within a range which can be handled as an image, or data having values within a range which cannot be handled as an image. For example, as described later, the output of the first value may have any value as long as the output is a tensor having a size which can be input to the second model.

In addition, for example, the training of the third model may include updating a parameter of the first model included in the third model.

In this way, the first model can output a feature quantity more suitable for the object recognition by the second model. Thus, it is possible to further reduce decrease in recognition performance by the third model.

In addition, for example, the training of the third model may further include updating a parameter of the second model included in the third model.

In this way, the second model can output a recognition result more suitable for the feature quantity from the first model. Thus, it is possible to further reduce decrease in recognition performance by the third model.

In addition, for example, the training of the third model may further include: determining a degree of blur in the training image; determining, according to the degree of blur, degrees of update of parameters of the first model and the second model which are a degree of update of the parameter of the first model and a degree of update of the parameter of the second model; and updating the parameter of the first model and the parameter of the second model included in the third model, according to the determined degrees of update of the parameters.

In this way, since the degrees of update of the parameters are determined according to the degree of blur in the training image, it is possible to effectively update the parameter according to the degree of blur in the training image.

In addition, for example, in the determining of the degrees of update of the parameters, the degree of update of the parameter of the first model may be determined to be greater than the degree of update of the parameter of the second model when the degree of blur is greater than a threshold value. In addition, for example, in the determining of the degrees of update of the parameters, the degree of update of the parameter of the first model may be determined to be less than the degree of update of the parameter of the second model when the degree of blur is less than a threshold value.

In this way, it is possible to effectively train the first model so that it is possible to output a feature quantity effective for the object recognition by the second model regardless of the degree of blur in the training image. For example, when the degree of blur is higher than the threshold value, increasing the degree of update of the parameter of the first model makes it possible to train the first model so that the first model can output a feature quantity which further reduces the influence of blur against the object recognition. When the degree of blur is lower than the threshold value, decreasing the degree of update of the parameter of the first model can comparatively increase the degree of update of the parameter of the second model for the object recognition, which makes it possible to train the first model so that the recognition performance increases.

In addition, for example, the training of the third model may further include: determining a performance of the first model; determining, according to the performance, degrees of update of parameters of the first model and the second model which are a degree of update of the parameter of the first model and a degree of update of the parameter of the second model; and updating the parameter of the first model and the parameter of the second model included in the third model, according to the determined degrees of update of the parameters.

In this way, since the degrees of update of the parameters are determined according to the performance of the first model, it is possible to effectively update the parameters according to the performance of the first model.

In addition, for example, in the determining of the degrees of update of the parameters, the degree of update of the parameter of the first model may be determined to be less than the degree of update of the parameter of the second model when the performance is higher than a threshold value. In addition, for example, in the determining of the degrees of update of the parameters, the degree of update of the parameter of the first model may be determined to be greater than the degree of update of the parameter of the second model when the performance is lower than a threshold value.

In this way, it is possible to effectively train the first model according to the performance of the first model so that the first model can output the feature quantity effective for the object recognition in the second model. For example, when the performance is higher than the threshold value, it is possible to train the first model by decreasing the degree of update of the parameter of the first model so that the feature quantity does not change excessively. When the performance is lower than the threshold value, it is possible to train the first model by increasing the degree of update of the parameter of the first model so that the feature quantity changes to feature quantity that is enough to increase the object recognition performance.

In addition, for example, the training image may include an image obtained by imaging by a multi-pinhole camera.

In this way, even when the image captured by the multi-pinhole camera is input, it is possible to generate the third model capable of outputting the appropriate result of object recognition. Furthermore, the image captured by the multi-pinhole camera is an image with a large degree of blur, and thus it is possible to further increase the effect of the privacy protection of the object.

In addition, for example, the training image may include an image obtained by convoluting a point spread function onto a predetermined image.

In this way, it is possible to generate a training image that is identical to or close to the image captured by the multi-pinhole camera. In other words, it is possible to obtain the training image without performing imaging for obtaining a training image using the multi-pinhole camera. Thus, it is possible to easily generate the training image for machine learning.

Furthermore, an information processing system according to an aspect of the present disclosure includes: an obtainer which obtains a third model in which a first model and a second model are connected so that an output of the first model becomes an input of the second model, the first model being a machine learning model that performs a deblurring process of an input image and outputs a feature quantity, the second model being a machine learning model that performs an object recognition process of the input image and outputs a result of the object recognition; a trainer which trains the third model through machine learning so that a difference between a result of object recognition and reference data decreases, the result of the object recognition being output from the third model after a training image with blur is input into the third model, the reference data relating to the result of the object recognition corresponding to the training image; and an outputter which outputs the third model which has undergone the training.

In this way, the same effects as obtainable according to the above-described information processing method are provided.

Furthermore, an information processing device according to an aspect of the present disclosure includes: an obtainer which obtains an image with blur; a controller which obtains a result of object recognition by inputting the image with blur into a third model in which a first model and a second model are connected so that an output of the first model becomes an input of the second model, the first model being a machine learning model that performs a deblurring process of an input image and outputs a feature quantity, the second model being a machine learning model that performs an object recognition process of the input image and outputs a result of the object recognition; and an outputter which outputs information based on the obtained result of object recognition. The third model is a machine learning model trained through machine learning using a result of object recognition and reference data. The result of the object recognition is output from the third model after a training image with blur is input into the third model, and the reference data relates to the result of the object recognition corresponding to the training image.

In this way, the same effects as obtainable according to the above-described information processing method are provided.

Furthermore, these general and specific aspects may be implemented using a system, an apparatus, a method, an integrated circuit, a computer program, or a non-transitory computer-readable recording medium such as a CD-ROM, or any combination of systems, apparatuses, methods, integrated circuits, computer programs, or computer-readable recording media.

Hereinafter, specific examples of an information processing method, an information processing system, and an information processing device according to aspects of the present disclosure will be described with reference to the Drawings. Each of the embodiments indicated here indicates one specific example of the present disclosure. Accordingly, numerical values, constituent elements, steps, the order of the steps, etc., indicated in the following embodiments are mere examples, and therefore do not limit the scope of the present disclosure. In addition, constituent elements not recited in any one of the independent claims among the constituent elements in the following exemplary embodiments are described as optional constituent elements.

In addition, each of the drawings is a schematic diagram, and is not necessarily represented precisely. Accordingly, for example, the scales in the respective diagrams do not necessarily match. Throughout the drawings, substantially the same constituent elements are assigned with the same numerical signs, and overlapping descriptions are skipped or simplified.

In addition, in the DESCRIPTION, the terms such as "same" indicating relationships between elements, numerical values, and numerical value ranges are not expressions that represent precise meanings only, and are expressions that cover the substantially equivalent ranges which are different by, for example, as approximately several percent (for example, approximately 5%).

### [Embodiment]

Hereinafter, an information processing system, etc., according to an embodiment is described with reference to FIGs. 1 to 8.

### [1. A Configuration of an Information System]

First, the information system according to the embodiment is described with reference to FIG. 1. FIG. 1 is a diagram illustrating a functional configuration of information system 10 according to the embodiment. Information system 10 is a system which trains a machine learning model for face recognition using a blurred image such as an MPH image, and performs object recognition using the trained machine learning model.

As illustrated in FIG. 1, information system 10 includes multi-pinhole camera 100, information processing system 200, and information processing device 300. Multi-pinhole camera 100 and information processing system 200, multi-pinhole camera 100 and information processing device 300, and information processing system 200 and information processing device 300 are respectively connected communicatively. It is to be noted that multi-pinhole camera 100 is also referred to as MPH camera 100. MPH camera 100 does not need to be always provided at the time of the training.

MPH camera 100 is capable of obtaining, in one imaging operation, a plurality of images (pinhole images: PH images) having mutually different viewpoints for an object (subject). MPH camera 100 is also referred to as a lensless multi-pinhole camera. MPH camera 100 is a camera using a plurality of pinholes (multiple pinholes), and includes a multi-pinhole mask and an image sensor. The multi-pinhole mask is disposed apart by a predetermined distance at an object side with respect to the image sensor. Thus, light passed through the multi-pinhole mask enters the image sensor. The multi-pinhole mask has a plurality of pinholes arranged at random or at equal intervals. It is to be noted that the number of pinholes is not limited particularly as long as it is, for example, 2 or more.

The image sensor obtains an image (MPH image) of the object through each pinhole. The MPH image is an image obtained through each pinhole. The obtained PH image differs depending on the position and magnitude of each pinhole. The image sensor obtains a plurality of superimposed images (encoded images) of PH images as MPH images. An MPH image can be an image which cannot be recognized visually by any human, but from which information in the image such as an imaging-target object, a surrounding environment, etc., can be obtained using computer processing.

It is to be noted that, in the DESCRIPTION, an image which is captured by a camera that is different in kind from cameras including a multi-pinhole mask and thus does not include blur that is generated by a multi-pinhole mask is also referred to as an unblurred image. The unblurred image is, for example, an image captured through an optical system. The unblurred image is normally obtained by light from an object being collected and formed through an optical system. One example of the optical system is a lens. When a human directly views an object under an environment in which the object is present, the human visually recognizes the object in a similar state as the case in which the object is present in the unblurred image. In other words, the human visually recognizes the unblurred image captured by a normal camera (for example, a camera with a lens) in the same manner as in an actual space. It is to be noted that the normal camera does not have an multi-pinhole mask.

It is to be noted that, in the DESCRIPTION, the blurred image and the unblurred image are images in which the face of a person is present.

Information processing system 200 receives, as an input image (training image), a blurred image captured by MPH camera 100, and generates a face reconstruction type recognition neural network (NW) which is a machine learning model that outputs the result of face recognition. For example, the result of the face recognition may be the result of determination as to whether the persons in the two blurred image are the same person, or may be a feature quantity of the face of the person in each blurred image.

Information processing system 200 includes blurred image generator 210, first storage 220, second storage 230, third storage 240, first trainer 250, fourth storage 260, second trainer 270, and fifth storage 280. It is to be noted that blurred image generator 210 and first storage 220 are not essential elements of information processing system 200. Alternatively, first storage 220 to fifth storage 280 may be implemented as one storage device, or may be implemented as two or more storage devices. It is to be noted that the face reconstruction type recognition NW model is one example of an object recognition model.

Blurred image generator 210 generates a blurred image by blurring an unblurred image based on a PSF set and an unblurred image. The PSF set is a set of point spread function (PSF) stored in first storage 220, and the unblurred image is stored in second storage 230. Blurred image generator 210 generates the blurred image by, for example, performing a convolution operation (convolution integration operation) using the PSF onto the unblurred image. Blurred image generator 210 may partition the unblurred image into a plurality of regions, and perform the convolution operation for each partitioned region using the PSF corresponding to the region.

The blurred image generated by blurred image generator 210 may be used at the time of the training of at least one of a face recognition NW model and a face reconstruction type recognition NW model to be described later, or may be used at the time of checking of recognition performance (see FIG. 7 to be described later).

It is to be noted that the PSF set may include a PSF extracted from an image captured by MPH camera 100. For example, the PSF set may be obtained by partitioning an image captured by MPH camera 100 into a plurality of regions so as to include a PSF extracted in each of the partitioned regions.

In this way, the blurred image that is generated by blurred image generator 210 becomes an image similar to the image captured by MPH camera 100. In other words, the blurred image generated by blurred image generator 210 becomes an image like an image in which a plurality of PH images are superimposed. The blurred image generated by blurred image generator 210 can be an image which cannot be recognized visually by any human but can be used as an image for training of an object recognition model (for example, a face recognition model).

First storage 220 stores a PSF set including a plurality of PSFs that is used by blurred image generator 210 to generate a blurred image. The PSF indicates the degree of blur (the degree of deterioration) generated by an optical system when a point light source is imaged, and is a function which represents an intensity distribution of blur when the blur has been generated. It can be also said that the PSF is a function which represents how a light ray spreads when an ideal point light source passes through an optical system. The PSF ideally has an impulse response.

Second storage 230 stores an image (training image) that is used to train a machine learning model at first trainer 250 and second trainer 270. Second storage 230 stores an unblurred image set including a plurality of unblurred images and a blurred image set including a plurality of blurred images. The unblurred image set may include an image captured by a normal camera, or may include an image included in a data set for training which has been made public on the Internet. The blurred image set may include an image generated by blurred image generator 210, may include an image captured by MPH camera 100, or may include the both images. It is to be noted that the image captured by the normal camera and the image included in the data set for training made public on the Internet are unblurred images, and each of the images is one example of a predetermined image.

Third storage 240 stores teacher data (correct-answer information) that is used to train a machine learning model at first trainer 250 and second trainer 270. The teacher data is an unblurred image corresponding to a blurred image and information (ID information) including a feature of a person present in the blurred image and the unblurred image.

First trainer 250 individually trains a face reconstruction neural network model (face reconstruction NW model) and a face recognition neural network model (face recognition NW model). The face reconstruction NW model performs a deblurring process onto an input blurred image and outputs a feature quantity of an unblurred image corresponding to the blurred image, and the face recognition NW model receives the feature quantity as an input, and outputs the result of face recognition corresponding to the feature quantity. First trainer 250 includes face reconstruction NW trainer 251 and face recognition NW trainer 252.

Face reconstruction NW trainer 251 receives the blurred image as an input, and trains the face recognition NW model through machine learning using the unblurred image corresponding to the blurred images as teacher data. The face reconstruction NW model is a machine learning model which performs a deblurring process onto the input image and outputs a feature quantity of the image which has undergone the deblurring process, and is one example of a first model. The face reconstruction NW model is, for example, a machine learning model using a neural network (for example, a convolutional neural network (CNN)) such as deep learning. However, the face reconstruction NW model may be another machine learning model. For example, the face reconstruction NW model may include an input layer, a hidden layer, and an output layer, and the hidden layer may be configured to include a convolution layer and a pooling layer. It is to be noted that reconstruction used here include removing blur from a blurred image.

Face recognition NW trainer 252 receives an unblurred image as an input, and trains the face recognition NW model through machine learning using the ID information for identifying the person present in the unblurred image as teacher data. The face recognition NW model is a machine learning model which performs a face recognition process onto the input image and outputs the result of the face recognition (one example of the result of object recognition), and is one example of a second model. The face recognition NW model is, for example, a machine learning model using a neural network such as deep learning. However, the face reconstruction NW model may be another machine learning model. As the face recognition NW model, a known face recognition network may be used, or, for example, "SphereFace", "Cosface", "ArcFace", or the like may be used.

Fourth storage 260 stores a trained machine learning model trained by first trainer 250. Fourth storage 260 stores a face reconstruction NW model trained by face reconstruction NW trainer 251 and a face recognition NW model trained by face recognition NW trainer 252. It is to be noted that storing a machine learning model means storing information about a network parameter, an operation algorithm (machine learning algorithm), etc., in the machine learning model.

Second trainer 270 trains a face reconstruction type recognition neural network model (face reconstruction type recognition NW model) in which a face reconstruction NW model and a face recognition NW model are connected. Connecting the face reconstruction NW model and the face recognition NW model means associating an input of information and an output of information so that the output of the face reconstruction NW model becomes the input of the face recognition NW model. The output of the face reconstruction NW model and the input of the face recognition NW model are intermediate products in the face reconstruction type recognition NW model.

The face reconstruction type recognition NW model is a machine learning model which outputs the result of the face recognition based on the blurred image using the face reconstruction NW model and the face recognition NW model, and is one example of a third model. Second trainer 270 includes face reconstruction type recognition NW trainer 271.

Face reconstruction type recognition NW trainer 271 receives the blurred image as an input, and trains the face reconstruction type recognition NW model through machine learning using the ID information for identifying the person present in the blurred image as teacher data. Face reconstruction type recognition NW trainer 271 is one example of a trainer.

It is to be noted that the machine learning in each of first trainer 250 and second trainer 270 is, for example, implemented using backpropagation (BP), or the like in deep learning.

Fifth storage 280 stores a trained machine learning model trained by second trainer 270. Fifth trainer 280 includes face reconstruction type recognition NW model trained by face reconstruction type recognition NW trainer 271.

It is to be noted that each of first storage 220 to fifth storage 280 are implemented by semiconductor memory, but the way of implementation is not limited thereto. Alternatively, first storage 220 to fifth storage 280 may be implemented in the forms of mutually different storage devices, or may be implemented in the form of one storage device.

Information processing system 200 outputs, via communication, the trained face reconstruction type recognition NW model stored in fifth storage 280 to information processing device 300. In this way, it is possible to store the trained face reconstruction type recognition NW model onto seventh storage 320 of information processing device 300.

Information processing device 300 performs object recognition using the trained object recognition model. In this embodiment, information processing device 300 performs the face recognition using the trained face reconstruction type recognition NW model. Information processing device 300 includes sixth storage 310, seventh storage 320, processor 330, outputter 340, and obtainer 350.

Sixth storage 310 stores a blurred image set including a plurality of blurred images (MPH images) that obtainer 350 has obtained from MPH camera 100 via communication. The blurred images are images which become targets of face recognition by the trained face reconstruction type recognition NW model. The blurred images are images for which privacy of the object(s) present therein are protected.

Seventh storage 320 stores the trained face reconstruction type recognition NW model output from information processing system 200.

It is to be noted that each of sixth storage 310 and seventh storage 320 are implemented by semiconductor memory, but the way of implementation is not limited thereto. Alternatively, sixth storage 310 and seventh storage 320 may be implemented in the forms of mutually different storage devices, or may be implemented in the form of one storage device.

Processor 330 performs a process of causing the face reconstruction type recognition model to receive the blurred image as an input and obtain the result of face recognition. Processor 330 inputs the blurred image stored in sixth storage 310 into the face reconstruction type recognition NW model trained by information processing system 200, and obtains the output from the face reconstruction type recognition NW model as the result of the face recognition. Processor 330 is one example of a controller.

Outputter 340 outputs information based on the obtained result of the face recognition. Outputter 340 determines whether a person present in a first blurred image and a person present in a second blurred images are the same person based on a first face recognition result and a second face recognition result. The first face recognition result is the output obtained when a first blurred image has been input to the face reconstruction type recognition NW model, and a second face recognition result is the output obtained when the second blurred image has been input to the face reconstruction type recognition NW model. Outputter 340 outputs the result of the determination.

Outputter 340 may be configured to include a display device that is for example a liquid crystal display, and output the information by displaying the information. Alternatively, outputter 340 may be configured to include communication circuitry, and output the information to an outside device via communication.

Obtainer 350 obtains the blurred image from MPH camera 100. Obtainer 350 stores the obtained blurred image onto sixth storage 310.

As described above, information processing device 300 outputs the face recognition result without using any unblurred image, and thus is capable of reducing leakage of the privacy due to image leakage, etc., more significantly compared with the case in which an unblurred image is input.

### [2. An operation That Is Performed by the Information System]

Next, an operation that is performed by information system 10 is described with reference to FIGs. 2 to 6.

### [2-1. An operation That is Performed by the Information Processing System]

First, an operation that is performed by information processing system 200 is described with reference to FIGs. 2 to 5. FIG. 2 is a diagram schematically illustrates a training procedure of a face reconstruction type recognition NW model in information processing system 200 according to this embodiment. FIG. 3 is a flow chart indicating a training process of the face reconstruction NW model in information processing system 200 according to this embodiment.

As illustrated in FIG. 2, in this embodiment, the training of the machine learning model is performed in the procedure of a first step, a second step, and a third step. It is to be noted that the training of the machine learning model is only required to include at least the third step.

As illustrated in FIG. 2, training of the face reconstruction NW model is performed in the first step, training of the face recognition NW model is performed in the second step, and training of the face reconstruction type recognition NW model in which the face reconstruction NW model and the face recognition NW model are connected is performed in the third step. The training in the third step is performed after the training in the first step and the training in the second step are performed. The execution order of the training in the first step and the training in the second step is not particularly limited.

The first step is a step of performing training for making it possible to appropriately performing a process of deblurring an input blurred image. In other words, in the first step, a parameter for reconstructing a feature quantity of an unblurred image from the blurred image is updated. The second step is a step of performing training for making it possible to appropriately performing face recognition based on the unblurred image. In other words, in the second step, a parameter for appropriately performing the face recognition is updated. The first step and the second step can also be referred to as steps for performing pre-training of the face reconstruction NW model and the face recognition NW model.

The third step is a step of connecting the face reconstruction NW model and the face recognition NW model and re-training the connected face reconstruction NW model and face recognition NW model. In other words, in the third step, a parameter for appropriately performing the face recognition based on the blurred image is updated. The third step can also be referred to as a step of performing fine-tuning of additionally training the trained face reconstruction NW model and face recognition NW model.

As illustrated in FIG. 3, in the first step, face reconstruction NW trainer 251 reads the blurred image from second storage 230, and reads the unblurred image corresponding to the blurred image from third storage 240 (S11). The blurred image and the unblurred image here are images in which the same person is present.

Next, face reconstruction NW trainer 251 trains the face reconstruction NW model (S12). As illustrated in FIG. 2, face reconstruction NW trainer 251 receives the blurred image as a training image, and trains the face reconstruction NW model using the unblurred image as teacher data. In this way, the parameter of the face reconstruction NW model is updated so as to decrease the difference between a feature quantity to be output and the teacher data. The input of the blurred image allows the face reconstruction NW model to output the feature quantity of the unblurred image corresponding to the blurred image.

The feature quantity here is represented by a tensor having a size of a horizontal width × a vertical width × the number of channels. The horizontal width of the tensor is the same as the horizontal width of the unblurred image which is teacher data. The vertical width of the tensor is, for example, the same as the vertical width of the unblurred image which is the teacher data. The number of channels of the tensor is the same as the number of channels of the unblurred image which is the teacher data. The number of channels is, for example, 3 channels of red, green, and blue (RGB) for each pixel. In other words, the tensor indicating the feature quantity is the same in size as the tensor indicating the unblurred image.

Although an image is reconstructed based on a feature quantity which is represented by a value of a tensor, no image may be reconstructed depending on the degree of reconstruction. The case in which the value of the tensor does not indicate an image is, for example, a case in which at least one value of a pixel is information including a value which does not fall within a range from 0 to 255.

Next, face reconstruction NW trainer 251 outputs a parameter of the trained face reconstruction NW model (S13). The parameter which has been output is stored into fourth storage 260.

Next, the second step is described with reference to FIGs. 2 and 4. FIG. 4 is a flow chart indicating a training process of the face recognition NW model in information processing system 200 according to this embodiment.

As indicated in FIG. 4, in the second step, face recognition NW trainer 252 reads an unblurred image from second storage 230, and reads ID information of a person present in the unblurred image from third storage 240 (S21). The unblurred image here is the same in tensor size as the unblurred image used as the teacher data at the time of the training of the face reconstruction NW model read in Step S11.

Next, face reconstruction NW trainer 252 trains the face recognition NW model (S22). As illustrated in FIG. 2, face recognition NW trainer 252 receives the unblurred image as a training image, and trains the face recognition NW model using the ID information corresponding to the unblurred image as teacher data. In this way, the parameter of the face recognition NW model is updated so as to decrease the difference between the output for the unblurred image and the teacher data.

It is to be noted that face recognition NW trainer 252 may use two unblurred images to be compared with each other as training images, and train the face recognition NW model using, as teacher data, information indicating whether a person present in one of the two unblurred image and a person present in the other unblurred image are the same person.

Next, face recognition NW trainer 252 outputs a parameter of the trained face recognition NW model (S23). The parameter which has been output is stored into fourth storage 260.

Next, the third step is described with reference to FIGs. 2 and 5. FIG. 5 is a flow chart indicating a training process of the face reconstruction type recognition NW model in information processing system 200 according to this embodiment.

As indicated in FIG. 5, in the third step, face reconstruction type recognition NW trainer 271 reads the face reconstruction NW model and the face recognition NW model from fourth storage 260 (S31). Step S31 is one example of obtainment of the third model. Face reconstruction type recognition NW trainer 271 also functions as an obtainer.

Next, face reconstruction type recognition NW trainer 271 reads the unblurred image from second storage 230, and reads the ID (ID information) of the person present in the unblurred image from third storage 240(S32). The blurred image read in Step S32 is one example of a training image. The blurred image may include an image captured by MPH camera 100, an image obtained by convoluting a point spread function onto a predetermined image, or the both images. The ID information is one example of reference data.

It is to be noted that the blurred image read in Step S32 may be, for example, a blurred image different from the blurred image read in Step S11, and that at least parts of the images may overlap with each other.

Next, face reconstruction type recognition NW trainer 271 trains the face reconstruction type recognition NW model in which the face reconstruction NW model and the face recognition NW model are connected (S33). As illustrated in FIG. 2, face reconstruction type recognition NW trainer 271 trains the face reconstruction type recognition NW model through machine learning so as to decrease the difference between the result of face recognition (one example of the result of object recognition) and the ID information which is teacher data of the face recognition result corresponding to the blurred image. The face recognition result has been obtained as the output of the face reconstruction type recognition NW model which has received the blurred image as the input. Specifically, face reconstruction type recognition NW trainer 271 obtains the feature quantity of the unblurred image corresponding to the blurred image obtained by inputting the blurred image into the face reconstruction NW model, and obtains the result of the face recognition according to the feature quantity obtained by inputting the feature quantity into the face recognition NW model. Next, face reconstruction type recognition NW trainer 271 updates the parameter of the face reconstruction type recognition NW model so as to decrease the difference between the face recognition result and the ID information. The third step is performed without using any unblurred image for which privacy is not protected.

In this way, the face reconstruction NW model is trained to be adapted to the face recognition NW model. In other words, the face reconstruction NW model is trained so as to be able to output the feature quantity that enables accurate output of the face recognition result which is the output of the face recognition NW model. The face reconstruction NW model is trained to output the unblurred image based on the blurred image in the first step, and is trained so as to be able to output the feature quantity adapted to the face recognition NW model based on the blurred image in the third step. The face reconstruction NW model trained so as to be able to extract the feature quantity adapted to the face recognition NW model may have a deblurring degree lower than the one obtainable when the face reconstruction NW model is trained in the first step. It is to be noted that the feature quantity may be an image.

The parameter of the face reconstruction type recognition NW model is updated so as to decrease the difference between the face recognition result to be output and the teacher data. The input of the blurred image allows the face reconstruction type recognition NW model to output the face recognition result that is more suitable for the blurred image.

In this way, the execution of the third step makes it possible to increase the accuracy in the face recognition result to be output, compared to the case of using the machine learning model in which the face reconstruction NW model which has undergone the first step and the face recognition NW model which has undergone the second step are simply connected to each other.

It is only necessary that face reconstruction type recognition NW trainer 271 update at least one of the parameter of the face reconstruction NW model and the parameter of the face recognition NW model in Step S33. For example, in Step S33, face reconstruction type recognition NW trainer 271 may update the parameter of the face reconstruction NW model, and may further update the parameter of the face recognition NW model.

Next, face reconstruction type recognition NW trainer 271 outputs a parameter of the trained face reconstruction type recognition NW model (S34). Face reconstruction type recognition NW trainer 271 outputs the parameter to information processing device 300 via a communicator (not illustrated). In addition, face reconstruction type recognition NW trainer 271 may store the parameter of the face reconstruction type recognition NW model onto fifth storage 280. Face reconstruction type recognition NW trainer 271 also functions as an outputter.

### [2-2. An operation That is Performed by the Information Processing Device]

Next, an operation that is performed by information processing device 300 is described with reference to FIG. 6. FIG. 6 is a flow chart indicating a recognition process using the face reconstruction type recognition NW model in information processing system 300 according to this embodiment. It is assumed that the trained face reconstruction type recognition NW model is stored in seventh storage 320, and that the blurred image is stored in sixth storage 310.

As indicated in FIG. 6, processor 330 reads the blurred image from sixth storage 310 (S41). The blurred image is an image captured by MPH camera 100.

Next, processor 330 reads the face reconstruction type recognition NW model from seventh storage 320, and inputs the blurred image into the read face reconstruction type recognition NW model (S42). By inputting the blurred image into the face reconstruction NW model, processor 330 obtains a feature quantity of the unblurred image corresponding to the blurred image which is the output of the face reconstruction NW model. Next, processor 330 inputs the feature quantity of the obtained unblurred image into the face recognition NW model, thereby obtaining the result of the face recognition.

Next, outputter 340 outputs the result of the face recognition (S43).

In this way, information processing device 300 is capable of performing the face recognition without using any unblurred image for which privacy is not protected, and thus is capable of protecting the privacy of a person present in the blurred image.

### [3. Experiment Results]

Here, recognition performances of the face reconstruction type recognition NW model generated as described above are described with reference to FIGs. 7 and 8. FIG. 7 is a diagram indicating comparison (simulation experiment results) of recognition performances for each of training conditions in the case where the face reconstruction type recognition NW model is trained using the blurred image generated by blurred image generator 210 as a training image. FIG. 8 is a diagram indicating comparison of recognition performances for each of training conditions in the case where the face reconstruction type recognition NW model is trained using the blurred image captured by MPH camera 100 as a training image.

Labelled faces in the wild (LFW), cross-pose LFW (CPLEW), and cross-age LFW (CALFW) in each of FIGs. 7 and 8 indicate a publicly known data sets which have been used in the experiments. PSFid denotes the PSF used by blurred image generator 210. A description is given of taking "3-025" as an example. "3-025" denotes a PSF obtained using MPH camera 100 having a multi-pinhole mask which has 3 pinholes disposed at intervals of 0.25 mm.

In FIG. 7, the data set for machine learning used at the time of the training is MS1MV2. The training image is a blurred image generated by convoluting a PSF indicated by PSFid onto an image (one example of a predetermined image) included in the MS1MV2. In FIG. 8, the training image used at the time of the training is a blurred image captured by MPH camera 100. Multi-pinhole masks each having a corresponding one of IDs "3-025" and "9-025" are used as the multi-pinhole mask of MPH camera 100. In addition, an evaluation image used at the time of the experiments is a blurred image generated by convoluting a PSF indicated by PSFid into an image included in LFW, CPLFW, and CALFW.

"SphereFace", "CosFase", and "ArcFace" indicate publicly known face recognition networks used as face recognition NW models.

The training conditions are 4 conditions of (A) to (D). The condition (A) indicates a correct-answer rate (%) in the case where an evaluation image is input to the face recognition NW model for which learning is performed using a blurred image. The condition (B) indicates a correct-answer rate (%) in the case where the evaluation image is input to the face reconstruction type recognition NW model which has undergone the first step and the third step among the first to third steps at the time of the training. The condition (C) indicates a correct-answer rate (%) in the case where the evaluation image is input to the face reconstruction type recognition NW model which has undergone only the first step and the second step among the first to third steps at the time of the training. In other words, the condition (C) indicates the correct-answer rate in the case where the evaluation image is input to the face reconstruction type recognition NW model which has not undergone the third step at the time of the training. The condition (D) indicates a correct-answer rate (%) in the case where the evaluation image is input to the face reconstruction type recognition NW model which has undergone all the first to third steps at the time of the training.

In addition, the right-side numerical value in each of "SphereFace", "CosFase", and "ArcFace" below PSFid indicates a correct-answer rate in the case where an unblurred image included in the LFW, CPLFW, or CALFW is input as the evaluation image into the corresponding one of the face recognition NW models, and the correct-answer rate is also referred to as an unblurred-image correct-answer rate.

As indicated in the conditions (B) to (D) in each of FIGs. 7 and 8, it is known that adequate correct-answer rates have been obtained as a whole when the face reconstruction type recognition NW model in which the face reconstruction NW model and the face recognition NW model are connected is used. Under the condition (B), the correct-answer rate is higher than the one obtained under the condition (C) in which the third step has not been performed. In addition, as for particular face recognition NWs (for example, SphereFace and ArcFace in FIG. 7), some of correct-answer rates are higher than the ones obtained under the condition (A). In comparison, the correct-answer rate under the condition (C) is below the correct-answer rate under the condition (A). In other words, it is known that the execution of the third step can increase the recognition performance. In addition, under the condition (D), it is known that approximately the same correct-answer rates as the unblurred-image correct-answer rates have been obtained as a whole. In other words, it is known that approximately the same recognition performances as the face recognition performances using the unblurred image are obtained by training the face reconstruction type recognition NW model through the execution of the first to third steps. It is considered that face recognition is often impossible when an evaluation image used in the experiments is input to a face recognition NW model (that is a face recognition NW model which has not undergone training using a blurred image as in the condition (A)) trained using an unblurred image which has been made public, and thus that the correct-answer rate of the face recognition result is sufficiently lower than the ones obtained under the conditions (B) to (D) in each of FIGs. 7 and 8.

As described above, information processing system 200 according to this embodiment trains the face reconstruction type recognition NW model through machine learning so as to decrease the difference between (i) a result of face recognition output from the face reconstruction type recognition NW model after the blurred image is input into the face reconstruction type recognition NW model in which the face reconstruction NW model and the face recognition NW mode are connected and (ii) reference data relating to the result of the face recognition corresponding to the blurred image.

### [Variation 1 of the Embodiment]

Next, an information processing system according to this variation of the embodiment is described with reference to FIG. 9. FIG. 9 is a flow chart indicating a training process of the face reconstruction type recognition NW model in the information processing system according to this variation. The information processing system according to this variation differs from information processing system 200 according to the embodiment mainly in the point that a face reconstruction type recognition NW trainer changes, at the time of training, learning rates of a face reconstruction NW model and a face recognition NW model according to the degree of blur in a blurred image (training image). Hereinafter, the information processing system according to this variation is described focusing on differences from information processing system 200 according to the embodiment. In addition, the configuration of the information processing system according to this variation is the same as that of information processing system 200 according to the embodiment. Thus, the same numerical signs as those assigned to the elements of information processing system 200 are assigned to the elements of the information processing system according to this variation, and overlapping descriptions thereof are omitted or simplified. In addition, in FIG. 9, processes identical to or similar to the processes in FIG. 5 are assigned with the same numerical signs as in FIG. 5, and overlapping descriptions thereof are omitted or simplified. It is to be noted that the learning rates are examples of the degrees of update of parameters.

As indicated in FIG. 9, face reconstruction type recognition NW trainer 271 of information processing system 200 according to this variation reads a blurred image and ID (ID information) (S32), and determines the degree of blur in the read blurred image (S131). The degree of blur in the read blurred image may be determined by performing image analysis of the blurred image. When the blurred image is an image captured by MPH camera 100, the degree of blur in the read blurred image may be determined based on the specifications (the number of pinholes, the intervals between the pinholes, etc.) of MPH camera 100. When the blurred image is an image generated by blurred image generator 210, the degree of blur in the read blurred image may be determined based on the PSF used to generate the blurred image. For example, face reconstruction type recognition NW trainer 271 may determine which one of predetermined blur degrees (values such as 1 to 10, levels of "high", "middle", and "low", or the like) is the degree of blur in the blurred image.

Face reconstruction type recognition NW trainer 271 may determine that a statistical value of the degrees of blur in a plurality of blurred images that are used to train the face reconstruction type recognition NW model are the degree of blur in the blurred image in the training. The statistical value may be one of the average value, the median value, the mode value, the minimum value, and the maximum value of the degrees of blur in the plurality of blurred images, but is not limited thereto.

In addition, face reconstruction type recognition NW trainer 271 may further determine whether the determined degree of blur is greater than or equal to a first threshold value. The first threshold value may be determined in advance, and stored in fourth storage 260.

Next, face reconstruction type recognition NW trainer 271 determines the learning rates of the face reconstruction NW model and the face recognition NW model according to the determined degree of blur (S132). For example, face reconstruction type recognition NW trainer 271 may determine one set of learning rates of the face reconstruction NW model and the face recognition NW model which is used at the time of training in Step S133.

For example, face reconstruction type recognition NW trainer 271 may determine the learning rates so that the learning rate of the face reconstruction NW model becomes greater than the learning rate of the face recognition NW model when the degree of blur is great. For example, face reconstruction type recognition NW trainer 271 may determine the learning rates so that the learning rate of the face reconstruction NW model becomes greater than the learning rate of the face recognition NW model when the degree of blur is great. Specifically, for example, face reconstruction type recognition NW trainer 271 may determine the learning rates so that, as the degree of blur becomes greater, (i) the difference between the learning rate of the face reconstruction NW model and the learning rate of the face recognition NW model becomes greater, and (ii) the learning rate of the face reconstruction NW model becomes higher than the learning rate of the face recognition NW model.

For example, face reconstruction type recognition NW trainer 271 may determine the learning rates so that the learning rate of the face reconstruction NW model becomes less than the learning rate of the face recognition NW model when the degree of blur is small. For example, face reconstruction type recognition NW trainer 271 may determine the learning rates so that the learning rate of the face reconstruction NW model becomes less than the learning rate of the face recognition NW model as the degree of blur becomes smaller. Specifically, for example, face reconstruction type recognition NW trainer 271 may determine the learning rates so that, as the degree of blur becomes smaller, the difference between the learning rate of the face reconstruction NW model and the learning rate of the face recognition NW model becomes greater, and the learning rate of the face recognition NW model becomes higher than the learning rate of the face reconstruction NW model.

In addition, for example, face reconstruction type recognition NW trainer 271 may determine the learning rates so that: the learning rate of the face reconstruction NW model becomes greater than the learning rate of the face recognition NW model when the determined degree of blur is greater than or equal to the first threshold value; and the learning rate of the face reconstruction NW model becomes less than the learning rate of the face recognition NW model when the determined degree of blur is less than the first threshold value.

In addition, for example, face reconstruction type recognition NW trainer 271 may determine the learning rates so that the learning rates become greater when the determined degree of blur is greater than or equal to the first threshold value than when the degree of blur is less than the first threshold value.

In addition, face reconstruction type recognition NW trainer 271 may set step-wise learning rates according to the degrees of blur in blurred images. For example, face reconstruction type recognition NW trainer 271 may: determine the learning rate of the face reconstruction NW model to be a first learning rate higher than the learning rate of the face recognition NW model when the determined degree of blur is greater than or equal to the first threshold value and less than a second threshold value greater than the first threshold value; and determine the learning rate of the face reconstruction NW model to be the second learning rate higher than the first learning rate when the determined degree of blur is greater than or equal to the second threshold value.

In addition, face reconstruction type recognition NW trainer 271 may determine the learning rates so that: the learning rate of the face reconstruction NW model becomes further less than the learning rate of the face recognition NW model as the degree of blur is greater; and the learning rate of the face reconstruction NW model becomes further greater than the learning rate of the face recognition NW model as the degree of blur becomes smaller.

In this way, the learning rate of the face reconstruction NW model and the learning rate of the face recognition NW model may be determined to be mutually different learning rates according to the degrees of blur in the blurred images that are used in the third step.

Next, face reconstruction type recognition NW trainer 271 trains the face reconstruction type recognition NW model using the determined learning rate (S133). Face reconstruction type recognition NW trainer 271 updates the parameter of the face reconstruction NW model and the parameter of the face recognition NW model according to the determined learning rates. In this way, the face reconstruction type recognition NW model is trained using the learning rates according to the degrees of blur in the blurred images used for the training, and thus the parameters are updated to be able to perform face recognition suitable for the blurred image.

Although the example in which the parameter update degree (hereinafter referred to as D1) of the face reconstruction NW model is made greater or less than the parameter update degree (hereinafter referred to as D2) of the face recognition NW model according to the degree of blur has been described, the way of changing parameter update degrees is not limited thereto. Specifically, D1 may be changed according to the degree of blur regardless of D2. For example, D1 is increased when the degree of blur is greater than a threshold value when D2 > D1 is satisfied, increased D1 may be smaller than D2.

### [Variation 2 of the Embodiment]

Next, an information processing system according to this variation of the embodiment is described with reference to FIG. 10. FIG. 10 is a flow chart indicating a training process of the face reconstruction type recognition NW model in the information processing system according to this variation. The information processing system according to this variation differs from information processing system 200 according to the embodiment mainly in the point that a face reconstruction type recognition NW trainer changes learning rates of a face reconstruction NW model and a face recognition NW model according to the performance of the face reconstruction NW model. Hereinafter, the information processing system according to this variation is described focusing on differences from information processing system 200 according to the embodiment. In addition, the configuration of the information processing system according to this variation is the same as that of information processing system 200 according to the embodiment. Thus, the same numerical signs as those assigned to the elements of information processing system 200 are assigned to the elements of the information processing system according to this variation, and overlapping descriptions are omitted or simplified. In addition, in FIG. 10, processes identical to or similar to the processes in FIG. 5 are assigned with the same numerical signs as in FIG. 5, and overlapping descriptions thereof are omitted or simplified.

As indicated in FIG. 10, face reconstruction type recognition NW trainer 271 of information processing system 200 according to this variation reads a blurred image and ID (ID information) (S32), and determines the performance of the face reconstruction NW model read in Step S31 (S231). The performance of the face reconstruction NW model may be determined based on reconstruction accuracy of the blurred image (debluring performance) in the face reconstruction NW model. The performance of the face reconstruction NW model may be determined, for example, based on a difference between (i) an output (feature quantity) obtained by inputting a blurred image different from a blurred image used in the training in the first step into the face recognition NW model and (ii) teacher data (feature quantity of an unblurred image) corresponding to the blurred image.

Face reconstruction type recognition NW trainer 271 may determine a statistical value indicating the difference between the output and the teacher data to be the performance of the face reconstruction NW model. The statistical value may be one of the average value, the median value, the mode value, the minimum value, and the maximum value of the differences corresponding to a plurality of blurred images, but is not limited thereto.

In addition, face reconstruction type recognition NW trainer 271 may further determine whether the determined difference is greater than or equal to a first threshold value. The first threshold value may be determined in advance, and stored in fourth storage 260.

Next, face reconstruction type recognition NW trainer 271 determines the learning rates of the face reconstruction NW model and the face recognition NW model according to the performance of the face reconstruction NW model (S232). For example, face reconstruction type recognition NW trainer 271 may determine one set of learning rates of the face reconstruction NW model and the face recognition NW model which is used at the time of training in Step S133.

For example, face reconstruction type recognition NW trainer 271 may determine the learning rates so that the learning rate of the face reconstruction NW model becomes less than the learning rate of the face recognition NW model when the performance of the face reconstruction NW model is high. For example, face reconstruction type recognition NW trainer 271 may determine the learning rates so that the learning rate of the face reconstruction NW model becomes less than the learning rate of the face recognition NW model as the performance of the face reconstruction NW model becomes higher. Specifically, for example, face reconstruction type recognition NW trainer 271 may determine the learning rates so that, as the performance of the face reconstruction NW model becomes higher, (i) the difference between the learning rate of the face reconstruction NW model and the learning rate of the face recognition NW model becomes greater, and (ii) the learning rate of the face recognition NW model becomes higher than the learning rate of the face reconstruction NW model.

For example, face reconstruction type recognition NW trainer 271 may determine the learning rates so that the learning rate of the face reconstruction NW model becomes greater than the learning rate of the face recognition NW model when the performance of the face reconstruction NW model is low. For example, face reconstruction type recognition NW trainer 271 may determine the learning rates so that the learning rate of the face reconstruction NW model becomes greater than the learning rate of the face recognition NW model as the performance of the face reconstruction NW model becomes lower. Specifically, for example, face reconstruction type recognition NW trainer 271 may determine the learning rates so that, as the performance of the face reconstruction NW model becomes lower, (i) the difference between the learning rate of the face reconstruction NW model and the learning rate of the face recognition NW model becomes greater, and (ii) the learning rate of the face reconstruction NW model becomes higher than the learning rate of the face recognition NW model.

In addition, face reconstruction type recognition NW trainer 271 may: determine the learning rate of the face reconstruction NW model to be less than the learning rate of the face recognition NW model when the determined performance of the face reconstruction NW model is higher than or equal to the first threshold value; and determine the learning rate of the face reconstruction NW model to be greater than the learning rate of the face recognition NW model when the determined performance of the face reconstruction NW model is lower than the first threshold value.

In addition, face reconstruction type recognition NW trainer 271 may determine the learning rates to be less than the learning rates in the case where the performance of the face reconstruction NW model is lower than the first threshold value, in the case where the determined performance of the face reconstruction NW model is higher than or equal to the firs threshold value.

In addition, face reconstruction type recognition NW trainer 271 may determine step-wise learning rates according to the performance of the face reconstruction NW model. For example, face reconstruction type recognition NW trainer 271 may: determine the learning rate of the face reconstruction NW model to be a first learning rate which is less than the learning rate of the face recognition NW model when the determined performance of the face reconstruction NW model is higher than or equal to the first threshold value and lower than the second threshold value higher than the first threshold value; and determine the learning rate of the face reconstruction NW model to be a second learning rate lower than the first learning rate when the determined performance of the face reconstruction NW model is higher than or equal to the second threshold value.

In this way, the learning rate of the face reconstruction NW model and the learning rate of the face recognition NW model may be determined to be mutually different learning rates according to the performance of the trained face reconstruction NW model trained in the first step.

Next, face reconstruction type recognition NW trainer 271 trains the face reconstruction type recognition NW model using the determined learning rate (S133). Face reconstruction type recognition NW trainer 271 updates the parameter of the face reconstruction NW model and the parameter of the face recognition NW model. In this way, the face reconstruction type recognition NW model is trained using the learning rate according to the performance of the face reconstruction NW model trained in the first step, it is possible to perform parameter update which is more suitable for the performance of the face reconstruction NW model in the third step.

Although the example in which the parameter update degree (hereinafter referred to as D1) of the face reconstruction NW model is made greater or less than the parameter update degree (hereinafter referred to as D2) of the face recognition NW model according to the performance of the face reconstruction NW model has been described, the way of changing parameter update degrees is not limited thereto. Specifically, D1 may be changed according to the performance of the face reconstruction NW model regardless of D2. For example, D1 is increased when the performance of the face reconstruction NW model is higher than a threshold value when D2 > D1 is satisfied, increased D1 may be smaller than D2.

### [Other Embodiments]

The present disclosure has been provided based on embodiments and variations (hereinafter, also referred to as embodiments, etc.), the present disclosure is not limited to the above-described embodiments, etc. The present disclosure covers and encompasses embodiments that a person skilled in the art may arrive at by adding various kinds of modifications to the above embodiments, etc., or by optionally combining some of the constituent elements in different embodiments within the scope of the one or more aspects of the present disclosure.

Although the examples in which images are obtained by cameras have been described in the above embodiment, etc., examples are not limited thereto. Images generated using computer graphics (CG) are also available.

Although the examples in which the images are images obtained by visible-light cameras have been described in the above embodiment, etc., examples are not limited thereto. Images obtained by non-invisible-light cameras such as infrared cameras or ultraviolet cameras are also available, and images obtained by cameras which cover both visible light and invisible light such as multi-spectrum cameras, or the like are also available.

Although the examples in which the images captured by the MPH camera are used as input images at the time of the recognition in the information processing device according to the embodiment, etc., have been described, blurred images generated by the blurred image generator, or the like may be used as input images.

Although the examples in which the face recognition is to determine whether a person present in each of two blurred images (images of faces) is the same person (perform 1:1 authentication) have been described in the above embodiment, etc., examples are not limited thereto. Face recognition may be face recognition that is performed when a blurred image (image of the face) of a person is input in the case where blurred images of N unidentified persons have been input in advance, and that is to determine whether the person present in the input blurred image is any one of the N persons or is not any of the N persons (1:N authentication).

In addition, although the examples in which the machine learning models are machine learning models using neural networks have described, other machine learning models are also available. For example, machine learning models using random forest, genetic programming, etc., are also available.

Although the examples in which the object recognition processes using the trained object recognition models are performed in the information processing device in the above embodiments, etc., the object recognition processes may be performed in the information processing system. In addition, the information processing device may be included in a multi-pinhole camera.

In addition, the order of the processes described in each of the embodiments, etc., is one example. The order of the processes may be modified, or the processes may be executed in parallel. Alternatively, a part of the processes may not be executed.

In addition, the partitioning of the functional blocks in each of the block diagrams is one example. A plurality of functional blocks may be implemented as one functional block, or one functional block may be partitioned into a plurality of blocks, or a part of one functional block may be moved to another functional block. In addition, functions of functional blocks having similar functions may be processed by hardware or software in parallel or in time division.

In addition, each of the information processing system or the information processing device may be implemented as a single device, or may be implemented as a plurality of devices. For example, the first trainer and the second trainer may be implemented as mutually different devices. When the information processing system or the information processing device is implemented by a plurality of devices, the constituent elements of the information processing system or the information processing device may be divided to the plurality of devices in any way. In addition, the communication method between the plurality of devices is not particularly limited.

Each of the constituent elements described in the embodiments, etc., may be implemented as software, and may be typically implemented as an LSI which is an integrated circuit. Each of the constituent elements may be made as separate individual chips, or as a single chip to include a part or all thereof. LSI is mentioned here, but there are instances where, due to a difference in the degree of integration, the designations IC, system LSI, super LSI, and ultra LSI are used. Furthermore, the approach for circuit integration is not limited to an LSI, and a circuit may be implemented using a dedicated circuit or a general-purpose processor. It is also possible to use a field programmable gate array (FPGA) that is programmable after the LSI is manufactured, and a reconfigurable processor in which connections and settings of circuit cells within the LSI are reconfigurable. Furthermore, if integrated circuit technology that replaces LSI appear through progress in semiconductor technology or other derived technology, that technology can naturally be used to carry out integration of the constituent elements.

Furthermore, the technique according to the present disclosure may be implemented as the above-described program, or may be implemented as a non-transitory computer-readable recording media having the program stored thereon. Furthermore, the program can be distributed via transmission media such as the Internet as a matter of course. For example, the program or digital signals of the program may be transmitted via a telecommunication line, a wireless or wired communication line, a network represented by the Internet, a data broadcast, and so on. In addition, the program or digital signals of the program may be executed by means of another independent computer system transmitting the program or the digital signals recorded on the recording media, or transmitting the program or digital signals via the network, or the like.

Furthermore, in each of the embodiments, etc., each of the constituent elements may be configured in the form of dedicated hardware, or may be implemented by executing a software program suitable for each constituent element. Each of the constituent elements may be implemented by means of a program executer such as a CPU or a processor reading out a software program recorded on a recording medium such as a hard disc or a semiconductor memory and executing the software program.

### [Industrial Applicability]

The present disclosure is widely applicable to devices which perform object recognition using images.

### [Reference Signs List]

- 10: information system
- 100: multi-pinhole camera (MPH camera)
- 200: information processing system
- 210: blurred image generator
- 220: first storage
- 230: second storage
- 240: third storage
- 250: first trainer
- 251: face reconstruction NW trainer
- 252: face recognition NW trainer
- 260: fourth storage
- 270: second trainer
- 271: face reconstruction type recognition NW trainer (obtainer, trainer, outputter)
- 280: fifth storage
- 300: information processing device
- 310: sixth storage
- 320: seventh storage
- 330: processor (controller)
- 340: outputter
- 350: obtainer

## Claims

1. An information processing method which is executed by a computer, the information processing method comprising:
obtaining a third model in which a first model and a second model are connected so that an output of the first model becomes an input of the second model, the first model being a machine learning model that performs a deblurring process of an input image and outputs a feature quantity, the second model being a machine learning model that performs an object recognition process of the input image and outputs a result of the object recognition;
training the third model through machine learning so that a difference between a result of object recognition and reference data decreases, the result of the object recognition being output from the third model after a training image with blur is input into the third model, the reference data relating to the result of the object recognition corresponding to the training image; and
outputting the third model which has undergone the training.

2. The information processing method according to claim 1, wherein the training of the third model includes updating a parameter of the first model included in the third model.

3. The information processing method according to claim 2, wherein the training of the third model further includes updating a parameter of the second model included in the third model.

4. The information processing method according to claim 3, wherein the training of the third model further includes:
determining a degree of blur in the training image;
determining, according to the degree of blur, degrees of update of parameters of the first model and the second model which are a degree of update of the parameter of the first model and a degree of update of the parameter of the second model; and
updating the parameter of the first model and the parameter of the second model included in the third model, according to the determined degrees of update of the parameters.

5. The information processing method according to claim 4, wherein in the determining of the degrees of update of the parameters, the degree of update of the parameter of the first model is determined to be greater than the degree of update of the parameter of the second model when the degree of blur is greater than a threshold value.

6. The information processing method according to claim 4, wherein in the determining of the degrees of update of the parameters, the degree of update of the parameter of the first model is determined to be less than the degree of update of the parameter of the second model when the degree of blur is less than a threshold value.

7. The information processing method according to claim 3, wherein the training of the third model further includes:
determining a performance of the first model;
determining, according to the performance, degrees of update of parameters of the first model and the second model which are a degree of update of the parameter of the first model and a degree of update of the parameter of the second model; and
updating the parameter of the first model and the parameter of the second model included in the third model, according to the determined degrees of update of the parameters.

8. The information processing method according to claim 7, wherein in the determining of the degrees of update of the parameters, the degree of update of the parameter of the first model is determined to be less than the degree of update of the parameter of the second model when the performance is higher than a threshold value.

9. The information processing method according to claim 7, wherein in the determining of the degrees of update of the parameters, the degree of update of the parameter of the first model is determined to be greater than the degree of update of the parameter of the second model when the performance is lower than a threshold value.

10. The information processing method according to any one of claims 1 to 9,
wherein the training image includes an image obtained by imaging by a multi-pinhole camera.

11. The information processing method according to any one of claims 1 to 9,
wherein the training image includes an image obtained by convoluting a point spread function onto a predetermined image.

12. An information processing system comprising:
an obtainer which obtains a third model in which a first model and a second model are connected so that an output of the first model becomes an input of the second model, the first model being a machine learning model that performs a deblurring process of an input image and outputs a feature quantity, the second model being a machine learning model that performs an object recognition process of the input image and outputs a result of the object recognition;
a trainer which trains the third model through machine learning so that a difference between a result of object recognition and reference data decreases, the result of the object recognition being output from the third model after a training image with blur is input into the third model, the reference data relating to the result of the object recognition corresponding to the training image; and
an outputter which outputs the third model which has undergone the training.

13. An information processing device comprising:
an obtainer which obtains an image with blur;
a controller which obtains a result of object recognition by inputting the image with blur into a third model in which a first model and a second model are connected so that an output of the first model becomes an input of the second model, the first model being a machine learning model that performs a deblurring process of an input image and outputs a feature quantity, the second model being a machine learning model that performs an object recognition process of the input image and outputs a result of the object recognition; and
an outputter which outputs information based on the obtained result of object recognition,
wherein the third model is a machine learning model trained through machine learning using a result of object recognition and reference data, the result of the object recognition being output from the third model after a training image with blur is input into the third model, the reference data relating to the result of the object recognition corresponding to the training image.
